# EUROPÄISCHE PATENTANMELDUNG

(11) **EP 0 712 800 A2**
(43) Veröffentlichungstag der Anmeldung: **22.05.1996**
(21) Anmeldenummer: 96102637.4
(22) Anmeldetag: 22.02.1996
(51) Int. Cl.: B65G 53/46

(54) **Verfahren zur Förderung eines pneumatisch förderbaren Mediums, Förderaggregat und Dichtplatte**

(71) Anmelder: Aliva Aktiengesellschaft, CH-8967 Widen-Mutschellen (CH)
(72) Erfinder: Egli, Ernst, 8951 Fahrweid (CH)
(74) Vertreter: Troesch Scheidegger Werner AG

(57) **Zusammenfassung**

Um an einem Rotorförderaggregat mit umlaufenden Rotorbüchsen (7), welche in einem Füllbereich (6) in Richtung (F) mit Füllgut gefüllt werden, sicherzustellen, dass die beim Einfüllen des Mediums verdrängte Luft möglichst ungehindert nach aussen entweichen kann, wird in einer Dichtplattenanordnung (9), entlang welcher die Rotorbüchsen (7) umlaufen, im Füllbereich (6), eine nur unvollständig verschliessende Dichtung zwischen stationärer Dichtplatte (9) und den umlaufenden Rotorbüchsen (7) erstellt, indem periphere Einformungen (22) in der Dichtplatte (9) das Entweichen von Luft gewährleisten.

## Beschreibung

Die vorliegende Erfindung betrifft ein Verfahren der im Oberbegriff von Anspruch 1 genannten Art sowie ein Förderaggregat der im Oberbegriff von Anspruch 5 genannten Art, weiter eine Dichtplatte nach dem Oberbegriff von Anspruch 9.

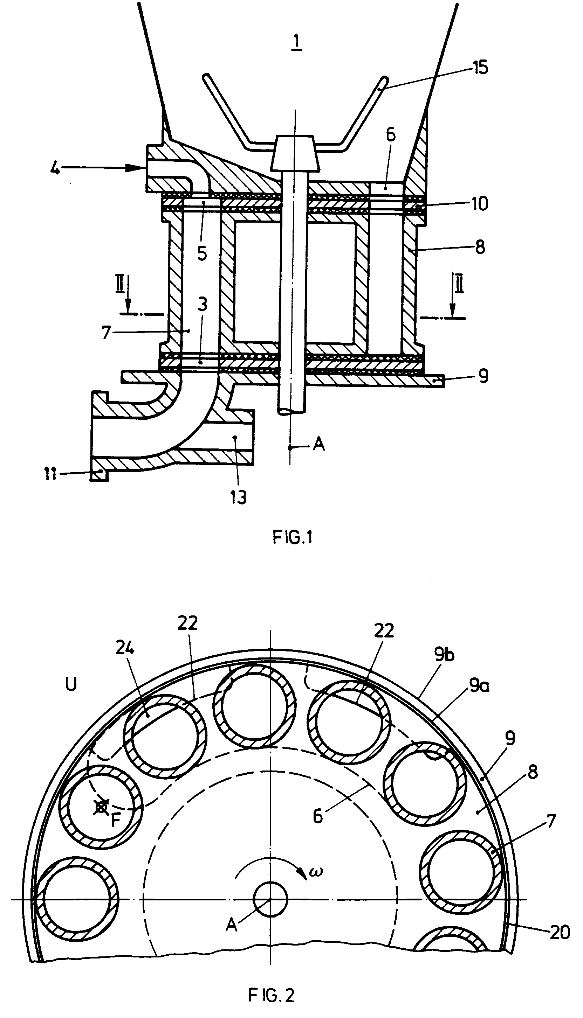

Solche Verfahren bzw. Förderaggregate und Dichtplatten sind bekannt. In Fig. 1 ist, schematisch, der bekannte Aufbau einer Rotorförderanlage dargestellt, bei der ein pneumatisch förderbares Medium, wie im genannten Oberbegriff von Anspruch 1 spezifiziert, gefordert wird. In einen Trichter 1 wird das förderbare Medium, wie beispielsweise und insbesondere Beton, eingefüllt. Unterhalb des Trichters 1 läuft, getrieben um eine Achse A, ein Rotor 8 um. Aehnlich einem Revolver, weist der Rotor 8, an seinem Umfang verteilt, mehrere Aufnahmebüchsen 7 für das Medium auf. Ortsfest ist am Trichter 1 eine Füllöffnung 6 so angeordnet, dass, sequentiell, die Aufnahmebüchsen 7 bei Drehen des Rotors mit der Oeffnung 6 in Ausrichtung gebracht werden.

Die jeweils mit der Einfüllöffnung 6 in Ausrichtung gebrachten Büchsen 7 des Rotors 8 sind unten durch eine stationäre Dichtplatte 9 verschlossen.

Trichterseitig ist, gerätefest, eine Druckluftleitung 7 vorgesehen, welche über eine Druckluftöffnung 5 mit jeweiligen, damit in Ausrichtung gebrachten Büchsen 7 in Wirkverbindung gebracht wird. In dieser Ausschiessposition ist die jeweilige Büchse 7 auch ausgerichtet auf eine unten gelegene Ausschiessöffnung 3 in der Dichtplatte 9. Die Dichtplatte 9 verschliesst, einerseits, in Einfüllposition die jeweilige Büchse 7 nach unten und stellt, anderseits, für das Ausschiessen des in die jeweilige Büchse 7 eingefüllten Betons Dichtheit um die Ausschiessöffnung 3 sicher.

Eine obere Dichtplatte 10 wirkt auf die Oberseite des Rotors 8. Die Ausschiessöffnung 3 geht über einen Krümmer 11 in die hier nicht dargestellte Förderleitung für das Medium über, wie insbesondere in die Förderleitung einer Betonspritzmaschine. In den Krümmer 11 mündet eine Förderdruckluftleitung 13 ein. Im Trichter 1 wirkt üblicherweise ein getriebenes Rührwerk 15.

Als Betonspritzmaschine eingesetzt, arbeitet ein solcher Rotorförderer nach dem sogenannten "Dünnstromprinzip", bei welchem das Spritzmedium, Beton, in der Druckluft, welche durch Leitung 13 eingespiesen wird, praktisch schwimmend, durch die an den Bogen 11 angeschlossene Förderleitung gefördert wird. Entlang dieser Förderleitung werden in diesem Falle zusätzlich Wasser, gegebenenfalls weitere Zusatzmittel dem Spritzmedium beigefügt.

Wird bei einem Förderverfahren bzw. einem Förderaggregat der anhand von Fig. 1 erläuterten Art die Förderleistung erhöht, insbesondere dadurch, dass ohne Realisation grösserer Rotordurchmesser die bauliche axiale Länge der Büchsen erhöht wird und/oder die Drehzahl des Rotors erhöht wird, so zeigt es sich, dass, abhängig vom zu fördernden Medium, wie insbesondere dessen Viskosität, eine Grenze erreicht wird, bei der nurmehr eine ungenügende Förderung erfolgt.

Es ist Aufgabe der vorliegenden Erfindung, dieses Problem zu lösen.

Beim Förderverfahren der eingangs genannten Art wird dies dadurch erreicht, dass man die Büchsen beim Füllen entlüftet.

Betrachtet man Fig. 1, so ist ersichtlich, dass, wenn eine jeweilige Büchse 7 durch die Oeffnung 6 gefüllt wird, nicht sichergestellt ist, dass die in dieser Büchse 7 enthaltene Luft überhaupt oder mindestens rasch genug entweichen kann.

Dem Wortlaut von Anspruch 2 folgend, wird dabei bevorzugterweise die Entlüftung im Bereich der bezüglich Büchseneinfüllöffnung entgegengesetzten Büchsenöffnung realisiert, d.h., mit Blick auf Fig. 1, im Bereich der unteren Büchsenöffnung.

Um im weiteren für die Büchsenfüll- und entlüftungsoperation Zeit zu gewinnen, wird, dem Wortlaut von Anspruch 3 folgend, vorgeschlagen, dass man das Einfüllen und/oder das Entlüften entlang eines vorgegebenen Drehwinkelbereiches der Büchsen vornimmt, welcher grösser ist als der durch eine Büchse aufgespannte Drehwinkelbereich.

Dem Wortlaut von Anspruch 4 folgend, wird in einer höchst einfachen und bevorzugten Art und Weise die erfindungsgemässe Entlüftung durch unvollständiges Dichten der erwähnten anderen Büchsenöffnung beim Füllen realisiert, welche Undichtung, mit Blick auf Fig. 1, durch die ortsfeste, untere Dichtplattenanordnung realisiert werden kann.

Ein erfindungsgemässes Förderaggregat zeichnet sich nach dem Wortlaut des kennzeichnenden Teils von Anspruch 5 aus, bevorzugte Ausführungsformen davon nach den Ansprüchen 6 bis 8.

Eine Dichtplatte, die eine höchst einfache Lösung des eingangs erwähnten Problems sicherstellt, ist in Anspruch 9, deren bevorzugte Ausführungsform in Anspruch 10 spezifiziert.

Bevorzugte Verwendungen des Verfahrens bzw. des erfindungsgemässen Förderaggregates sind in den Ansprüchen 11 bis 13 spezifiziert.

Die Erfindung wird anschliessend beispielsweise anhand von Fig. 2 dargestellt.

Somit zeigen:
- Fig. 1: schematisch, einen Längsschnitt durch ein bekanntes Förderaggregat mit Rotor, wie es beispielsweise in der EP-A-0 691 292 beschrieben ist;
- Fig. 2: eine Schnittdarstellung gemäss Linie II-II durch das bekannte Förderaggregat nach Fig. 1, jedoch nun in einer bevorzugten erfindungsgemässen Ausführungsform zur Ausführung des erfindungsgemässen Verfahrens bzw. ausgerüstet mit einer erfindungsgemässen Dichtplatte.

In Fig. 2 sind für dieselben Bauteile, die bereits anhand von Fig. 1 erläutert wurden, dieselben Bezugszeichen gewählt.

Der Rotor 8 ist gebildet durch die oben und unten offenen Büchsen 7, welche an oberen und unteren Rotorplatten montiert sind, wovon, in der Darstellung nach Fig. 2, nur die Rotorplatte 20 ersichtlich ist. Die Füllrichtung der Büchsen 7 ist mit F bezeichnet. Der Rotor dreht entlang der ortsfesten Dichtplatte 9, welche bevorzugterweise zweilagig ausgebildet ist, nämlich aus einer ersten, mit dem Rotor in dichtende Wirkverbindung tretenden Platte 9a, vorzugsweise aus elastischem Material, vorzugsweise aus Gummi, sowie eine untere Stützplatte 9b, vorzugsweise aus Stahl.

Erfindungsgemäss sind mindestens in die Platte 9a aus elastischem Material Einformungen 22 vorgesehen, welche im wesentlichen gegenüber der gestrichelt dargestellten Einfüllöffnung in der oberen Dichtungsplattenanordnung vorgesehen sind. Wie ersichtlich, ist bevorzugterweise die Einfüllöffnung 6 kreissegmentförmig ausgebildet und spannt einen Kreisbogen auf, der wesentlich länger ist als der durch eine der Büchsen 7 jeweils aufgespannte Kreisbogen bezüglich der Achse A.

Die Einnehmungen 22 sind so an der äusseren Peripherie der Dichtungsplatte 9, insbesondere deren elastische Platte 9a, eingeformt, dass die über die Einfüllöffnung 6 streichenden Büchsen 7, im Bereich 24, durch die Einnehmungen 22 mit der Umgebung kommunizieren, während die übrige Querschnittsfläche der Büchsen unten durch die Dichtplatte 9 verschlossen ist.

Bei Einfüllen des Mediums in Richtung F wird dadurch erreicht, dass die Luft aus den eben gefüllten Büchsen 7 durch die Oeffnungen 24 und die Einnehmungen 22 in die Umgebung U entweichen kann, so dass ein rasches und im wesentlichen luftfreies Füllen der Büchsen 7 ermöglicht wird.

Grundsätzlich kann es sich bei der erfindungsgemäss ausgebildeten Dichtplatte 9 um eine kreisförmige Platte handeln; sie kann aber auch, wie dargestellt, und aus Gründen, wie sie in der EP-A-0 691 292 beschrieben sind, als Kreissegment, wie in Fig. 2 dargestellt, als 180^{o}-Kreissegment ausgebildet sein. Wesentlich ist, dass die erfindungsgemässe Dichtplatte mit den Einnehmungen 22 mindestens den Füllbereich abdeckt, d.h. den Bereich, entlang welchem ein oder mehrere Büchsen 7 durch die entsprechend ausgebildete Füllöffnung 6 gefüllt werden.

Wie sich dem Fachmann ohne weiteres ergibt, wäre es auch durchaus möglich, die Entlüftungseinnehmungen 22 an der inneren Peripherie der durch die Büchsen 7 durchlaufenen Kreisbahn vorzusehen oder Bohrungen in der Platte 9 vorzusehen.

Grundsätzlich ist es wesentlich, im Füllbereich der Büchsen eine Entlüftung letzterer so sicherzustellen, dass die durch das eingefüllte Medium verdrängte Luft ohne weiteres entweichen kann. Die dargestellte Ausführungsform ist konstruktiv äusserst einfach durch Realisation der gezeigten erfindungsgemässen Dichtplatte.

Dadurch, dass die Einfüllöffnung 6 und damit der Einfüllbereich sich über einen wesentlich längeren Kreisbogen erstreckt als durch eine Büchse 7 aufgespannt, kann die Einfülloperation während einer entsprechend längeren Zeitspanne bei konstant betrachteter Drehgeschwindigkeit ω des Rotors erfolgen. Dies ist vor allem bei der Förderung von viskoseren oder körnigeren Füllmedien wesentlich, wie beispielsweise von Beton.

## Patentansprüche

1. Verfahren zur Förderung eines pneumatisch förderbaren Mediums, bei dem man das Medium sukzessive durch die eine Oeffnung beidseits offener, mit ihrer anderen Oeffnung dabei entlang einer Dichtungsanordnung (9) laufender Büchsen (7) eines umlaufenden Rotors (8) in einem Füllbereich (6) füllt und, bezüglich des Füllbereiches (6) versetzt, den Füllinhalt der Büchsen (7) mittels Druckluft ausschiesst, dadurch gekennzeichnet, dass man die Büchsen (7) beim Füllen entlüftet (22).

2. Verfahren nach Anspruch 1, dadurch gekennzeichnet, dass man die Büchsen (7) im Bereich ihrer anderen Oeffnung entlüftet.

3. Verfahren nach einem der Ansprüche 1 oder 2, dadurch gekennzeichnet, dass man das Einfüllen und/oder das Entlüften entlang eines vorgegebenen Drehwinkelbereiches der Büchsen (7) vornimmt, welcher grösser ist als der durch eine Büchse (7) aufgespannte Drehwinkelbereich.

4. Verfahren nach einem der Ansprüche 1 bis 3, dadurch gekennzeichnet, dass man die Entlüftung durch unvollständiges Dichten (22) der anderen Büchsenöffnung beim Füllen realisiert.

5. Förderaggregat für pneumatisch förderbares Medium, umfassend
- einen drehgetriebenen Rotor (8) mit mehreren um die Rotorachse (A) angeordneten, beidseits offenen Büchsen (7),
- beidseitige stationäre Dichtanordnungen (9, 10), die mit dem Rotor (8) im Bereich der Büchsenöffnungs-Bewegungsbahn zusammenwirken, und
- mindestens eine Füllöffnung (6) für die Büchsen (7) in der einen (10) der Dichtanordnungen, eine Druckluftöffnung (4) für Druckbeaufschlagung des Büchseninnern (7), welche Druckluftöffnung in der einen oder der anderen der Dichtanordnungen (9, 10) angeordnet ist, eine der Druckluftöffnung (4) in Richtung parallel zur Drehachse (A) des Rotors (8) gegenüberliegende Ausschiessöffnung (3), entsprechend in der anderen oder der einen der Dichtungsanordnungen (9, 10),
dadurch gekennzeichnet, dass von den mit ihren einen Oeffnungen auf die Füllöffnung (6) ausgerichteten Büchsen (7) eine weitere Verbindung zur Förderaggregatumgebung (U) vorgesehen ist.

6. Förderaggregat nach Anspruch 5, dadurch gekennzeichnet, dass die weitere Verbindung (22) im Bereich der der Dichtanordnung (10) mit der Füllöffnung (6) gegenüberliegenden Büchsenöffnung vorgesehen ist.

7. Förderaggregat nach einem der Ansprüche 5 oder 6, dadurch gekennzeichnet, dass eine der Füllöffnung (6) in Richtung der Rotorachse (A) gegenüberliegende Partie einer Dichtanordnung (9) für die jeweilige Büchse (7) eine Verbindung (22) mit der Umgebung (U) festlegt, wobei vorzugsweise die Verbindung (22) an der Partie entlang eines Drehwinkelbereiches bezüglich der Rotorachse (A) festgelegt ist, welcher länger ist als der durch eine Büchse festgelegte Drehwinkelbereich, vorzugsweise wesentlich länger.

8. Förderaggregat nach einem der Ansprüche 5 bis 7, dadurch gekennzeichnet, dass die weitere Verbindung (22) dadurch realisiert ist, dass die der Dichtanordnung mit der Einfüllöffnung (6) gegenüberliegende Dichtanordnung in dem der Füllöffnung gegenüberliegenden Bereich den Oeffnungsquerschnitt der Büchsen (7) nur zum Teil verschliesst.

9. Kreisring- bzw. kreissegmentförmige Dichtplatte für ein Förderaggregat nach einem der Ansprüche 5 bis 8, dadurch gekennzeichnet, dass sie, mit Bezug auf den Kreisring-Mittenkreis radial nach innen und/oder aussen versetzt, mindestens eine Druchtrittsöffnung und/oder mindestens eine von der äusseren Peripherie einkragende oder von der inneren Peripherie auskragende Randeinformung (22) aufweist.

10. Dichtplatte nach Anspruch 9, dadurch gekennzeichnet, dass die Durchtrittsöffnung oder periphere Einformung (22) sich entlang eines Kreisbogens von im wesentlichen 90^{o} erstreckt.

11. Verwendung des Verfahrens nach einem der Ansprüche 1 bis 4 bzw. des Förderaggregates nach einem der Ansprüche 5 bis 8 für die Förderung pulverförmiger Media.

12. Verwendung des Verfahrens nach einem der Ansprüche 1 bis 4 bzw. des Förderaggregates nach einem der Ansprüche 5 bis 8 für die Förderung von Beton.

13. Verwendung nach Anspruch 12 für die Förderung pulverförmiger Zusatzkomponenten in den Strom eines Spritzmediums für die Bauwerkausspritzung.
